Europäisches Patentamt

European Patent Office

Office européen des brevets

(19)

(11) Veröffentlichungsnummer: **0 189 735**

**A1**

(12)

# EUROPÄISCHE PATENTANMELDUNG

(21) Anmeldenummer: 85810619.8

(22) Anmeldetag: 30.12.85

(51) Int. Cl.⁴: **B 65 G 23/44**

(30) Priorität: 16.01.85 CH 195/85

(43) Veröffentlichungstag der Anmeldung:
06.08.86 Patentblatt 86/32

(84) Benannte Vertragsstaaten:
AT DE FR GB IT NL SE

(71) Anmelder: **Gebrüder Frech AG**
**Zunzgerstrasse 24**
**CH-4450 Sissach(CH)**

(72) Erfinder: **Fink, Manfred**
**Oberdorfstrasse 18**
**CH-4443 Wittinsburg(CH)**

(74) Vertreter: **Feldmann, Clarence Paul**
**c/o Patentanwaltsbüro FELDMANN AG Postfach**
**Kanalstrasse 17**
**CH-8152 Glattbrugg(CH)**

(54) Spannvorrichtung an einem Bandförderer.

(57) Die Endlosbänder (3) von Bandförderer unterliegen gewissen Längenänderungen in Abhängigkeit der Temperatur und der Belastung. Die Spannvorrichtung soll diese Längenänderungen kompensieren und so eine gleichbleibende Spannung des Endlosbandes bewirken, wodurch Schlupf, Dehnung und Abrieb vermindert wird.

Der rücklaufende Teil (3') des Endlosbandes (3) wird kurz nach einer Stützrolle (2') über zwei Umlenkrollen (4, 4') geleitet, die in einer Wippe (5, 6) gelagert sind. Ueber einen Hebelarm (12) greift eine Feder (13) an der Wippe (5, 6) an. Die Feder (13) kann mittels einer Gewindestange (16) vorgespannt werden. Der Schwerpunkt (7) der Wippe ist gegenüber dem Niveau des rücklaufenden Teiles (3') des Endlosbandes (3) gegen unten versetzt.

Die Spannvorrichtung beeinflusst das seitliche Ablaufen des Endlosbandes nicht.

FIG. 1

Croydon Printing Company Ltd.

EP 0 189 735 A1

0189735

Gebrüder Frech AG

Fabrik für Transportgeräte

4450 <u>Sissach</u>

<u>Spannvorrichtung an einen Bandförderer</u>

Die vorliegende Erfindung betrifft eine Spannvorrichtung zur Erziehung einer gleichmässigen Spannung eines Endlosbandes eines Bandförderers. Förderbänder der hier zu besprechenden Art bestehen aus einem geschlossenen Band, welches endständig auf zwei Umlenktrommeln, die in einer Tragkonstruktion gelagert sind, läuft. Zwischen den Umlenktrommeln sind unterhalb der Förderseite des Bandes Stützrollen angeordnet, während die rücklaufende Seite des Bandes relativ frei hängend oder mit nur wenigen Stützrollen versehen ist.

Die Endlosbänder müssen für die einwandfreie Funktion des Bandförderers eine möglichst ,gleichbleibende Spannung

— 1 —

aufweisen. Ist das Band zu schlaff hat es Schlupf, ist das Band zu straff wird es überdehnt. In beiden Fällen gibt es einen erhöhten Abrieb am Band und entsprechend verkürzt sich dessen Lebensdauer.

Diese Gefahr ist bekannt und entsprechend hat man vorgesorgt, in dem man mindestens eine der beiden Umlenkrollen, meist die nicht getriebene, mittels beidseitig der Trommel individuell einstellbaren Spannern reguliert. Dies ist jedoch eine relative unflexible Lösung, weil die Anpassung der Spannung aufwendig ist. Ein erfahrener Service-Monteur erledigt dies von Zeit zu Zeit, wobei er darauf achten muss, das keine Verstellung der Richtung der Achse der Umlenktrommel erfolgt, da ansonsten das Band seitlich abläuft. Die Flexibilität des Bandes bringt es aber mit sich, dass die Achsrichtung der Umlenktrommel trotzdem verstellbar sein muss um ein Ablaufen des Bandes zu verhindern.

Für Bandförderer die den äusseren Temperatureinflüssen unterliegen ist das heute übliche System der Spannvorrichtung ungenügend, da sich das Band entsprechend den Temperaturschwankungen in seiner Länge

- 2 -

verändert. Entsprechend werden Bandförderer auf Flughäfen zweimal jährlich, im Frühjahr und im Herbst, der gemittelten Temperatur gemäss angepasst.

Obwohl die unbefriedigende Situation schon länger bekannt ist, wurde bis heute noch keine befriedigende Lösung gefunden. Versuche, eine Umlenktrommel federnd aufzuhängen missrieten, weil beispielsweise ungleichmässige Belastungen des Bandes sogleich dazu führen, dass das Band von den Trommeln läuft.

Es ist die Aufgabe der vorliegenden Erfindung für dieses Problem eine technisch einwandfreie und relativ preiswerte Lösung zu schaffen.

Diese Aufgabe löst eine Spannvorrichtung an einem Bandförderer gemäss Oberbegriff, mit den Merkmalen des kennzeichnenden Teils des Patentanspruches 1.

Eine gleichbleibende Spannung des Förderbandes kann trotz wechselnden Belastungen dadurch erreicht werden, dass an der Wippe eine Zugfeder angreift.

- 3 -

Für die Längenanpassung an das jeweilige Band kann durch eine längeneinstellbare Gewindestange zwischen der Zugfeder und einem Fixpunkt am Bandförderer erfolgen.

Ist der Einbau einer Zugfeder beispielsweise aus platzgründen kaum möglich, so kann eine Torsionsfeder vorgesehen werden, die über die Schwenkachse der Wippe auf dieselbe wirkt.

In der Zeichnung ist ein Ausführungsbeispiel der erfindungsgemässen Spannvorrichtung dargestellt und anhand der nachfolgenden Beschreibung erläutert. Es zeigt:

Figur 1 einen vertikalen Teilschnitt durch die Spannvorrichtung in Längsrichtung des Bandförderers

Figur 2 einen horizontalen Teilschnitt durch die Spannvorrichtung in Längsrichtung des Bandförderers im Bereich einer seitlichen Lagerung der Wippe.

- 4 -

Für die Erfindung ist der Gesamtaufbau des Bandförderers unwesentlich. Eine Gesamtdarstellung des Bandförderers erübrigt sich somit.

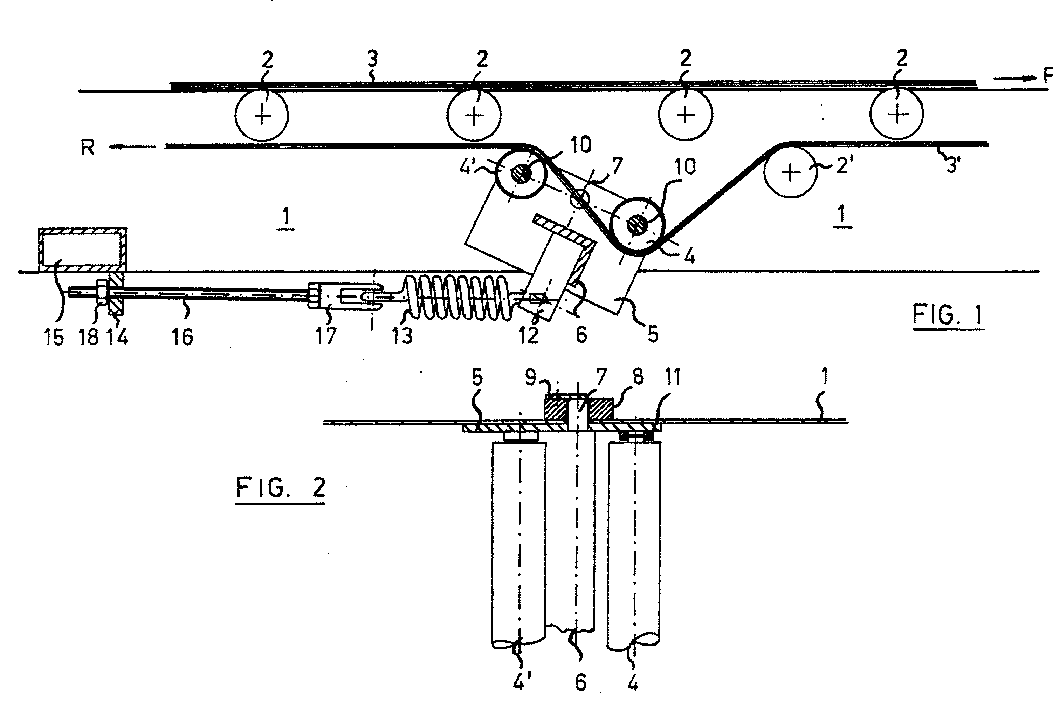

Figur 1 zeigt einen mittleren Teil eines Bandförderers im Bereich zwischen den beiden nicht dargestellten endständigen Umlenktrommeln, der gesamte Antriebskomplex entfällt somit. Von der tragenden Konstruktion des Bandförderers ist ein seitlicher Längsholm 1 schematisch angegeben. Im oberen Randbereich der Holmen 1 sind in regelmässigen, relativ kurzen Abständen Stüzrollen 2 gelagert. Ueber die Stützrollen 2 läuft die Förderseite des Endlosbandes 2 in Förderrichtung F. Bei der endständigen nicht dargestellten Umlenktrommel wird die Bewegungsrichtung des Endlosbandes in die Rücklaufvorrichtung 12 umgekehrt. Der rücklaufende Teil 3' des umlaufenden Endlosbandes 3 ist nur auf wenigen Stützrollen 2' abgestützt.

Die erfindungsgemässe Spannvorrichtung ist in unmittelbarer Nähe einer Stützrolle 2' des rücklaufenden Teiles 3' des Endlosbandes 3 in Rücklaufrichtung nach jener Stützrolle 2' angebracht. Die Spannvorrichtung besteht aus einer Wippe mit zwei darin gelagerten Umlenkrollen 4 und 4'. Die Wippe hat zwei seitliche Lagerplatten 5 die über eine L-förmige Schiene 6 verwindungssteif miteinander verbunden sind. Mittig zwischen den beiden Umlenkrollen 4,4' ist die Lagerplatte 5 selber auf Lagerbolzen 7 in Gleitlagern 8 gelagert. Der Lagerbolzen 7 durchsetzt dabei den Holmen 1. Das Gleitlager 8, beispielsweise ausgesinterter Bronce, ist aussen auf den Holmen 1 angebracht. Eine Abdeckung 9 gibt dem Bolzen 7 und damit der gesamten Wippe 5,6 eine seitliche Führung. Die Achsen 10 der Umlenkrollen 4,4' drehen in Gleitlagern 11 auf der Innenseite der Lagerplatte 5.

Der Drehpunkt der Wippe 5,6 gebildet durch den Drehbolzen 7 liegt unter der Ebene des rücklaufenden Teiles 3' des Endlosbandes 3. Der Drehpunkt ist so gewählt, dass bei einer üblichen Spannung des Bandes 3 dieses wieder etwa auf dasselbe Niveau gehoben wird wie vor der Spannvorrichtung. Das Endlosband läuft somit über die Stützrolle 2' des rückfahrenden Bandes · unter die nähergelegene Umlenkrolle 4 in der Wippe 5,6 und über die entferntere Umlenkrolle 4', so dass die Rollen 4,4' senkrecht übereinander zu liegen kommen und der rücklaufende Teil 3'

- 6 -

des Endlosbandes nicht an den Stützrollen 2 des Förderteiles des Bandes streift.

Die Auslenkung der Wippe 5,6 und damit die Spannung des Bandes 3 erfolgt durch eine Zugkraft die an einem Hebelarm 12 an der L-förmigen Schiene 6 anliegt. Der Hebelarm 12 weist eine Bohrung auf in die die offene Oese einer Zugfeder 13 eingehängt ist. Das andere Ende der Zugfeder 13 greift mittel oder unmittelbar an einen Fixpunkt am Bandförderer an. In der Zeichnung ist dieser Fixpunkt ein Plättchen 14, welches an einer Querstrebe 15 zwischen den bei Holmen 1 verläuft. Im gezeigten Beispiel ist zwischen der Feder 13 und dem Plättchen 14 eine Gewindestange 16 zwischengeschaltet. Die Feder 13 ist an einem Bolzen in einem frei drehbaren Joch 17 gehalten. Ueber die Spannmutter 18 kann die Länge der Gewindestange 16 geändert und somit die Vorspannung der Feder 13 eingestellt werden.

Rein summarisch sei hier noch auf einige äquivalente Lösungen, die nicht speziell dargestellt sind, hingewiesen. Die auf die Wippe wirkende Federkraft kann statt mit einer Zugfeder selbstverständlich auch mit

- 7 -

einer Druckfeder erfolgen. Falls die räumliche
Verhältnisse es erzwingen, kann auch eine Torsionsfeder
auf die Wippe angreifen. Dies lässt sich beispielsweise
so bewerkstelligen, dass die Wippe starr mit der Achse 7
verbunden ist und dieselbe an einer Torsionsfeder
angreift. Auch die Torsionsfeder lässt sich,
beispielsweise durch ein auf die Achse wirkende,
selbsthemmende Schnecke vorspannen.

Die diversen preiswerten Gleitlager können auch durch
Kugellager teilweise oder ganz ersetzt werden.

Das Wesen der Erfindung besteht jedoch darin, dass der
Gleichlauf (das Verhindern des seitlichen Ablaufens des
Endlosbandes von den endständigen Umlenktrommeln) und die
Spannung des Endlosbandes unabhängig voneinander
erfolgen.

Gebrüder Frech AG

Fabrik für Transportgeräte

4450 Sissach

PATENTANSPRUECHE

1. Spannvorrichtung zur Erzielung einer gleichmässigen Spannung eines Endlosbandes eines Bandförderers mit mindestens einer Stützrolle (2') im Bereich des rücklaufenden Teiles des Endlosbandes, dadurch gekennzeichnet, dass der rücklaufende Teil (3') des Endlosbandes von einer Stützrolle (2') über und zwischen zwei in einer Wippe (5,6) gelagerten Umlenkrollen (4,4') hindurch geführt ist, wobei die Wippe (5,6) unter Federeinwirkung steht.

2. Spannvorrichtung nach Anspruch 1, dadurch gekennzeichnet, dass an der Wippe (5,6) eine Zugfeder (13) angreift.

3. Spannvorrichtung nach Anspruch 2, dadurch gekennzeichnet, dass über eine längeneinstellbare Gewindestange (16) die Zugfeder (13) vorspannbar ist.

4. Spannvorrichtung nach Anspruch 1, dadurch gekennzeichnet, dass die Federeinwirkung mittig auf die Wippe (5,6) erfolgt.

5. Spannvorrichtung nach Anspruch 1, dadurch gekennzeichnet, dass auf die Wippe eine Torsionsfeder wirkt.

6. Spannvorrichtung nach Anspruch 1, dadurch gekennzeichnet, dass Schwenkpunkt (7) der Wippe (5,6) soweit unter der Ebene des rücklaufenden Teil (3') des Endlosbandes (3) liegt, dass im gespannten Zustand des Endlosbandes (3), das von der Umlenkrolle (4') der Wippe (5,6) ablaufende Band mindestens annähernd auf das Niveau des rücklaufenden Teiles (3') des Endlosbandes (3) vor der Stützrolle (2') verläuft.

FIG. 1

FIG. 2

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 397 469  (SOCIETE DE CHAUDRONNERIE DE L'OUEST) <br> * Seite 2, linke Spalte, Zeile 37 - rechte Spalte, Zeile 57; Figuren 1,2 * | 1,2 | B 65 G  23/44 |
| A | DE-C-1 119 164  (HAUHINCO MASCHINENFABRIK G. HAUSHERR, JOCHUMS & CO.) <br> * Spalte 3, Zeile 27 - Spalte 4, Zeile 4; Figuren 1-6 * | 1 | |
| A | FR-A- 922 756  (UNION DES VERRERIES MECANIQUES BELGES) <br> * Figur 1 * | 1 | |
| A | DE-U-1 901 380  (BERNHARD BEUMER MASCHINENFABRIK KG) <br> * Einzige Figur * | 1 | **RECHERCHIERTE SACHGEBIETE (Int. Cl.4)** <br><br> B 65 G  23/00 |
| A | DE-A-2 252 523  (MARSHALL HANDLING EQUIPMENT LTD.) <br> * Seite 2, Zeilen 17-27 * | 3 | |

Der vorliegende Recherchenbericht wurde für alle Patentansprüche erstellt.

| Recherchenort | Abschlußdatum der Recherche | Prüfer |
|---|---|---|
| BERLIN | 08-04-1986 | SIMON J J P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82